Europäisches Patentamt

European Patent Office

Office européen des brevets

(19)

(11) Numéro de publication : **0 033 701**
**B1**

(12) **FASCICULE DE BREVET EUROPÉEN**

(45) Date de publication du fascicule du brevet : 11.04.84

(21) Numéro de dépôt : 81400155.8

(22) Date de dépôt : 02.02.81

(51) Int. Cl.³ : **F 16 K 1/52**, F 16 K 1/38

(54) **Dispositif à vis pointeau pour le réglage du débit d'un fluide.**

(30) Priorité : 01.02.80 FR 8002293

(43) Date de publication de la demande :
12.08.81 Bulletin 81/32

(45) Mention de la délivrance du brevet :
11.04.84 Bulletin 84/15

(84) Etats contractants désignés :
**BE DE IT NL**

(56) Documents cités :
**DE-B- 1 061 589**
**FR-A- 1 603 574**
**US-A- 1 428 745**
**US-A- 2 640 521**
**US-A- 3 169 565**
**US-A- 3 473 781**

(73) Titulaire : **SOURDILLON**
**Veigné**
**F-37250 Montbazon (FR)**

(72) Inventeur : **Debray, Jean**
**c/o Sourdillon**
**F-37250 Montbazon (FR)**

(74) Mandataire : **Jacquelin, Marc-Henri et al**
**Cabinet PLASSERAUD 84, rue d'Amsterdam**
**F-75009 Paris (FR)**

Jouve, 18, rue St-Denis, 75001 Paris, France

EP 0 033 701 B1

Dispositif à vis pointeau pour le réglage du débit d'un fluide

L'invention est relative aux dispositifs à vis pointeau pour le réglage du débit d'un fluide, notamment d'un gaz.

L'invention s'applique plus particulièrement aux dispositifs à vis pointeau utilisés dans des robinets d'alimentation en gaz de brûleurs d'appareils à usage ménager, de tels dispositifs étant montés dans ces robinets pour obtenir un réglage correct du débit de gaz convenant à un fonctionnement au ralenti.

On conçoit alors que, notamment dans une telle application, il soit nécessaire d'obtenir un réglage du débit précis et constant ; par ailleurs, en raison des diverses possibilités d'alimentation en gaz des appareils à usage ménager (gaz butane, gaz propane, gaz de charbon, gaz naturel), on doit pouvoir modifier le réglage du débit de gaz sans pour autant perdre en précision et en constance par rapport au réglage initial effectué par le fabricant pour un type de gaz déterminé.

Les dispositifs de réglage de débit à vis pointeau comportent généralement,
— un logement cylindrique comprenant une partie taraudée et une partie lisse,
— un orifice axial formant siège ménagé au fond de ce logement cylindrique et communiquant avec un premier conduit de circulation du fluide,
— une vis pointeau comprenant une partie filetée coopérant avec la partie taraudée du logement cylindrique, une partie lisse en regard de la partie lisse du logement cylindrique et une extrémité interne formant soupape pour coopérer avec l'orifice formant siège du logement cylindrique,
— un orifice radial débouchant dans un espace délimité par la vis pointeau et le logement cylindrique, cet orifice communiquant avec un second conduit de circulation du fluide,
— et des moyens d'actionnement en rotation de la vis pointeau.

Un tel dispositif est décrit dans le brevet France n° 1 603 574.

Il est également connu de prévoir un organe d'étanchéité entre les parties lisses en regard du logement cylindrique et de la vis pointeau.

Dans un dispositif établi comme il vient d'être dit, on constate deux inconvénients majeurs.

Le premier de ces inconvénients réside dans l'existence d'un couple de rappel engendré par l'organe d'étanchéité monté entre les parties lisses en regard du logement cylindrique et de la vis pointeau ; en effet, cet organe d'étanchéité est le plus souvent constitué par un joint torique qui subit une déformation élastique lorsque, pour obtenir le réglage désiré, on agit sur la vis pointeau pour la faire tourner dans un sens ou dans l'autre. Cette déformation élastique emmagasine une énergie sous forme d'un couple de rappel qui, lorsqu'on cesse d'agir sur la vis pointeau après l'avoir amenée par un mouvement de rotation dans une position angulaire correspondant au débit souhaité, provoque une rotation de la vis pointeau dans le sens opposé au sens du susdit mouvement de rotation qui avait amené ladite vis pointeau dans sa position angulaire correcte. Il s'ensuit donc un déréglage auquel on ne peut remédier que par des tâtonnements qui rendent le réglage final aléatoire et long à obtenir.

Le second inconvénient réside dans un positionnement imprécis entre l'axe de la vis pointeau et l'axe du logement cylindrique : il peut donc se produire un désalignement important entre l'orifice axial du logement cylindrique formant siège et l'extrémité interne de la vis pointeau formant soupape. Lorsqu'un tel désalignement existe, le réglage est très imprécis en raison de la dissymétrie du passage délimité par l'orifice axial et l'extrémité interne ; cette imprécision est encore aggravée par la position angulaire incertaine de la vis pcinteau due au couple de rappel engendré par l'organe d'étanchéité.

Ces deux inconvénients sont d'autant plus importants que le dispositif est plus petit.

En premier lieu, l'organe d'étanchéité du type joint torique présente toujours des proportions plus importantes (notamment en section) lorsqu'on diminue le diamètre du dispositif, et, de ce fait, son couple de rappel est proportionnellement plus important.

En second lieu, les dimensions axiale et radiale des parties filetées et taraudées en prise se trouvent réduites, et, de ce fait, le positionnement axial entre l'axe de la vis pointeau et l'axe du logement cylindrique ne peut pas être assuré avec précision.

L'invention a précisément pour but de remédier aux deux inconvénients mentionnés ci-dessus.

Pour ce faire, on fait appel à des moyens connus en soi dans la technique des boulons autobloquants et qui consistent à donner à une zone déformable du boulon un diamètre légèrement supérieur au diamètre interne du taraudage pour lequel ledit boulon est prévu, ce qui permet, par coopération de cette zone avec le susdit taraudage, d'empêcher un dévissage intempestif du boulon. De tels moyens sont décrits dans le brevet US n° 3 169 565.

Cependant, il est nécessaire d'adapter ces moyens pour qu'ils puissent remédier aux inconvénients explicités ci-dessus, à savoir s'opposer au couple de rappel engendré par l'organe d'étanchéité et assurer un positionnement précis entre l'axe de la vis pointeau et l'axe du logement cylindrique.

En effet, la coopération entre la zone déformable du boulon décrit dans le brevet US n° 3 169 565 et le taraudage ne donne pas un couple de frottement suffisant pour s'opposer à un couple de rappel qui serait engendré par un organe d'étanchéité tel que celui qui est prévu dans le dispositif selon l'invention ; de plus, cette coopération, entre la zone déformable du boulon et le taraudage interne, ne permet pas d'assurer un positionnement précis entre l'axe du filetage

et l'axe du boulon, en raison du mauvais centrage entre la partie évasée et déformable de ce boulon et la partie taraudée sur laquelle cette partie évasée et déformable prend appui.

Selon l'invention, on a alors recours à la disposition selon laquelle l'extrémité externe de la vis pointeau opposée à son extrémité interne comporte une partie évasée et déformable dont le diamètre extérieur, lorsque la vis pointeau n'est pas en place, est supérieur au diamètre intérieur de la partie du logement cylindrique dans laquelle cette extrémité externe vient se loger lors de la mise en place de la vis pointeau, ce grâce à quoi on obtient, lorsque la vis pointeau est mise en place, d'une part, un blocage en rotation efficace de la vis pointeau, en raison du frottement entre la partie évasée et déformable et la partie lisse, et, d'autre part, un positionnement précis entre l'axe de la vis pointeau et l'axe du logement cylindrique, en raison du centrage de la partie évasée et déformable dans la partie lisse.

Avantageusement, la partie évasée et déformable de l'extrémité externe de la vis pointeau comporte deux zones délimitant entre elles une fente diamétrale qui constitue les moyens d'actionnement en rotation de la vis pointeau, moyens d'actionnement qui sont actionnés par un outil à lame du genre tournevis.

Au point de vue constructif, ces deux zones peuvent être obtenues par déformation vers l'extérieur à partir de la fente diamétrale. A cet effet, l'extrémité externe de la vis pointeau peut comporter une gorge circulaire ménagée approximativement au niveau du fond de la fente diamétrale.

Mises à part ces dispositions, l'invention consiste en un certain nombre d'autres dispositions qui s'utilisent de préférence en même temps et dont il sera plus explicitement question ci-après.

L'invention pourra, de toute façon, être bien comprise à l'aide du complément de description qui suit ainsi que du dessin ci-annexé, lesquels complément et dessin sont relatifs à un mode de réalisation préféré de l'invention et ne comportent, bien entendu, aucun caractère limitatif.

La figure 1, de ce dessin, montre, en coupe axiale, un dispositif de réglage de débit de gaz à vis pointeau établi conformément à l'invention, la vis pointeau étant montrée dans une position partiellement engagée dans le logement cylindrique.

La figure 2 montre, en vue partielle, ce même dispositif, la vis pointeau étant engagée dans le logement cylindrique et occupant une position correspondant au débit minimum de gaz.

La figure 3 montre encore ce même dispositif, la vis pointeau étant engagée dans le logement cylindrique et occupant une position correspondant à un débit de gaz supérieur au minimum.

Sur ces figures, on a montré un dispositif à vis pointeau pour le réglage du débit d'un gaz, plus particulièrement adapté pour être monté dans un robinet d'alimentation en gaz d'un brûleur d'appareil à usage ménager.

Ce dispositif est monté dans ce robinet pour obtenir un réglage correct du débit de gaz convenant à un fonctionnement au ralenti.

Ce dispositif comporte un logement cylindrique 1 comprenant une partie taraudée 1a et une partie lisse 1b ; un orifice axial 2 formant siège est ménagé au fond 1c de ce logement cylindrique, cet orifice axial 2 communiquant avec un premier conduit de circulation du gaz 3 qui peut, par exemple, être un conduit de départ du gaz vers le brûleur (non représenté).

Dans un tel logement cylindrique 1, il est prévu une vis pointeau 4 comprenant une partie filetée 4a coopérant avec une partie taraudée 1a du logement cylindrique 1, une partie lisse 4b, en regard de la partie lisse 1b du logement cylindrique 1, et une extrémité interne 5 formant soupape pour coopérer avec l'orifice 2 formant siège du logement cylindrique 1.

Un orifice radial 6 débouche dans un espace 7 délimité par la vis pointeau 4 et le logement cylindrique 1 ; cet orifice radial 6 communique avec un second conduit de circulation du gaz 8 qui peut, par exemple, être un conduit d'arrivée du gaz du robinet non représenté alimentant le brûleur en question.

A ce sujet, il convient de signaler que l'extrémité interne 5 de la vis pointeau 4 peut comporter un ensemble de canaux 9, comprenant un passage calibré 10, et par lesquels il existe une communication permanente entre le conduit d'arrivée 8 et le conduit de départ 3, et ce quelle que soit la position de la vis pointeau dans le logement cylindrique.

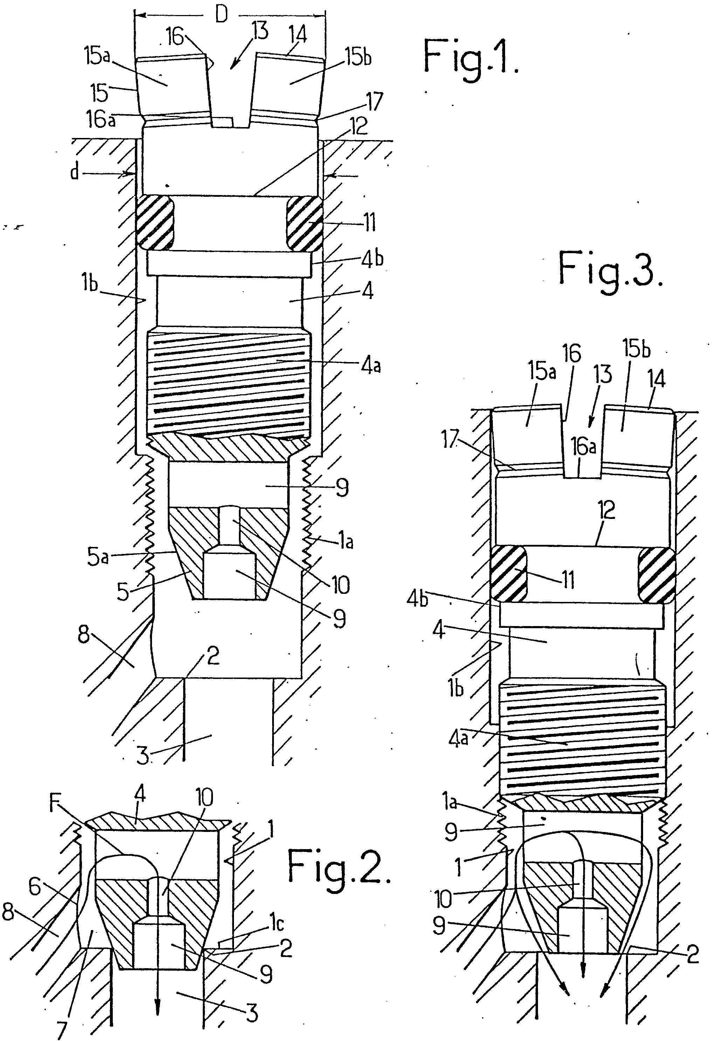

La valeur minimum du débit de gaz traversant un tel dispositif de réglage (par exemple dans le cas d'utilisation du gaz butane), est donc fixée par le passage calibré et est obtenue pour une position de la vis pointeau dans le logement cylindrique dans laquelle la soupape formée par l'extrémité interne 5 de la vis pointeau est en appui sur le siège formé par l'orifice axial 2 du logement cylindrique (fig. 2 sur laquelle la flèche F montre le cheminement du gaz).

La valeur du débit de gaz supérieure au minimum (par exemple dans le cas d'utilisation du gaz naturel), est obtenue en agissant sur la vis pointeau, de sorte que la soupape, formée par l'extrémité interne 5 de la vis pointeau, est écartée du siège formé par l'orifice axial 2 du logement cylindrique (fig. 3 sur laquelle les flèches F montrent le cheminement du gaz).

Pour obtenir une étanchéité entre la vis pointeau 4 et le logement cylindrique 1, il est prévu un organe d'étanchéité 11, du type joint torique, entre les parties lisses 1b et 4b en regard respectivement du logement cylindrique 1 et de la vis pointeau 4.

Cet organe d'étanchéité est, de préférence, abrité dans une gorge 12 ménagée dans la vis pointeau 4.

Des moyens d'actionnement en rotation 13 sont alors prévus pour permettre à l'utilisateur de faire tourner, dans un sens ou dans l'autre, la vis pointeau 4.

Ceci étant, l'extrémité externe 14 de la vis pointeau 4, opposée à son extrémité interne 5, comporte une partie évasée 15 dont le diamètre extérieur D, lorsque la vis pointeau 4 n'est pas en place (fig. 1) est supérieur au diamètre intérieur d de la partie du logement cylindrique 1 dans laquelle cette extrémité externe 14 vient se loger lors de la mise en place de la vis pointeau 4 (fig. 2 et 3).

Avantageusement, la partie évasée et déformable 15 de l'extrémité externe 14 de la vis pointeau comporte deux zones 15a et 15b délimitant entre elles une fente diamétrale 16 qui constitue les moyens d'actionnement en rotation 13 de la vis pointeau 4, moyens d'actionnement qui sont commandés par un outil à lame du genre tournevis.

Ces deux zones 15a et 15b sont, de préférence, obtenues par déformation vers l'extérieur à partir de la fente diamétrale 16.

A cet effet, l'extrémité externe 14 de la vis pointeau 4 comporte une gorge circulaire 17 ménagée approximativement au niveau du fond 16a de la fente diamétrale 16.

Suivant une disposition en soi connue, il est avantageux d'aménager l'extrémité interne 5 de la vis pointeau 4 de manière qu'elle présente une partie tronconique 5a destinée à coopérer avec le bord 2a de l'orifice axial 2 du logement cylindrique 1.

Ceci étant et quel que soit le mode de réalisation adopté, l'invention permet de réaliser un dispositif de réglage à vis pointeau qui présente notamment les avantages suivants :

— lorsque la vis pointeau est mise en place dans le logement cylindrique, le frottement et l'effet de coin obtenu entre la partie évasée et déformable 15 et l'extrémité externe 14 de la vis pointeau procurent un effet de blocage en rotation de la vis pointeau, cet effet de blocage s'opposant à l'action du couple de rappel engendré par l'organe d'étanchéité 11 ;

— lorsque la vis pointeau est mise en place dans le logement cylindrique, le centrage obtenu par le maintien de la partie évasée et déformable 15 et l'extrémité externe 14 de la vis pointeau procure un positionnement précis entre l'axe de la vis pointeau 4 et l'axe du logement cylindrique 1 ;

— la réalisation d'une vis pointeau agencée comme il vient d'être dit n'entraîne pratiquement aucun coût supplémentaire de fabrication par rapport à une vis pointeau classique ;

— l'agencement de l'extrémité externe 14 de la vis pointeau 4 permet plusieurs modifications du réglage du débit de gaz sans pour autant que les effets de frottement de coin et de centrage (dus à l'action de la partie évasée et déformable 15 dans la partie en regard du logement cylindrique 1) soient diminués de façon sensible ; de toute façon, dans la durée d'existence d'un appareil à gaz à usage ménager, on est amené à modifier ce réglage uniquement lorsque la provenance du gaz est modifiée, c'est-à-dire, par exemple, lorsque l'on passe d'un des gaz suivants à l'autre :

gaz butane, gaz propane, gaz de charbon, gaz naturel.

Comme il va de soi, et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

**Revendications**

1. Dispositif à vis pointeau pour le réglage du débit d'un fluide comportant :
— un logement cylindrique (1) comprenant une partie taraudée (1a) et une partie lisse (1b),
— un orifice axial (2) formant siège ménagé au fond de ce logement cylindrique (1) et communiquant avec un premier conduit (3) de circulation du fluide,
— une vis pointeau (4) comprenant une partie filetée (4a) coopérant avec la partie taraudée (1a) du logement cylindrique (1), une partie lisse (4b) en regard de la partie lisse (1b) du logement cylindrique (1) et une extrémité interne (5) formant soupape pour coopérer avec l'orifice (2) formant siège du logement cylindrique (1),
— un orifice radial (6) débouchant dans un espace (7) délimité par la vis pointeau (4) et le logement cylindrique (1), cet orifice radial (6) communiquant avec un second conduit (8) de circulation du fluide,
— un organe d'étanchéité (11) entre les parties lisses (1b, 4b) en regard respectivement du logement cylindrique (1) et de la vis pointeau (4),
— et des moyens d'actionnement en rotation (13) de la vis pointeau (4), caractérisés par le fait que l'extrémité externe (14) de la vis pointeau (4) opposée à son extrémité interne (5) comporte une partie évasée et déformable (15) dont le diamètre extérieur, lorsque la vis pointeau (4) n'est pas en place, est supérieur au diamètre intérieur de la partie lisse (1b) du logement cylindrique (1) dans laquelle cette extrémité externe (14) vient se loger lors de la mise en place de la vis pointeau (4), ce grâce à quoi on obtient, lorsque la vis pointeau (4) est mise en place, d'une part, un blocage efficace en rotation de la vis pointeau (4) en raison du frottement entre la partie évasée et déformable (15) et la partie lisse (1b), et, d'autre part, un positionnement précis entre l'axe de la vis pointeau (4) et l'axe du logement cylindrique (1), en raison du centrage de la partie évasée et déformable (15) dans la partie lisse (1b).

2. Dispositif selon la revendication 1, caractérisé par le fait que la partie évasée et déformable (15) de l'extrémité externe (14) de la vis pointeau (4) comporte deux zones (15a, 15b) délimitant entre elles une fente diamétrale (16) qui constitue les moyens d'actionnement en rotation de la vis pointeau, moyens d'actionnement qui sont actionnés par un outil à lame du genre tournevis.

3. Dispositif selon la revendication 2, caractérisé par le fait que les deux susdites zones (15a, 15b) sont obtenues par déformation vers l'extérieur, à partir de la susdite fente diamétrale (16).

4. Dispositif selon la revendication 3, caractérisé par le fait que l'extrémité externe (14) de la vis pointeau (4) comporte une gorge circulaire (17) ménagée approximativement au niveau du fond (16a) de la susdite fente diamétrale (16).

### Claims

1. A needle screw device for adjusting the flow of a fluid, comprising :
— a cylindrical housing (1) comprising a tapped part (1a) and a smooth part (1b),
— an axial orifice (2) forming a seat provided at the bottom of the cylindrical housing (1) and communicating with a first flow duct (3) for the fluid,
— a needle screw (4) comprising a threaded part (4a) cooperating with the tapped part (1a) of the cylindrical housing (1) a smooth part (4b) opposite the smooth part (1b) of the cylindrical housing (1) and an internal end (5) forming a valve for cooperating with the seat-forming orifice (2) of the cylindrical housing (1),
— a radial orifice (6) opening into a space (7) defined by the needle screw (4) and the cylindrical housing (1), this radial orifice (6) communicating with a second flow duct (8) for the fluid,
— a sealing member (11) between the facing smooth parts (1b, 4b) respectively of the cylindrical housing (1) and of the needle screw (4),
— and means (13) for rotatably actuating the needle screw (4), characterized by the fact that the external end (14) of the needle screw (4) opposite its internal end (5) comprises an outwardly tapering and deformable part (15) whose outer diameter, when the needle screw (4) is not in position, is greater than the inner diameter of the smooth part (1b) of the cylindrical housing (1) in which this external end (14) is housed during positioning of the needle screw (4), whereby, when the needle screw (4) is positioned, the needle screw (4) is efficiently secured against rotation because of the friction between the tapered and deformable part (15) and the smooth part (1b) and precise positioning is obtained between the axis of the needle screw (4) and the axis of the cylindrical housing (1), because of the centering of the tapering and deformable part (15) in the smooth part (1b).

2. The device according to claim 1, characterized by the fact that the outwardly tapering and deformable part (15) of the external end (14) of the needle screw (4) comprises two zones (15a, 15b) defining there between a diametrical slit (16) which forms the means for rotatably actuating the needle screw, which actuating means are actuated by a blade tool of the screwdriver kind.

3. The device according to claim 2, characterized by the fact that said two zones (15a, 15b) are obtained by outward deformation from said diametrical slit (16).

4. The device according to claim 3, characterized by the fact that the external end (14) of the needle screw (4) comprises a circular groove (17) formed approximately at the level of the bottom (16a) of said diametrical slit (16).

### Ansprüche

1. Nadelventil mit Schraubbetätigung für Fluidstromregulierung, das aufweist :
— ein zylindrisches Gehäuse (1) mit einem ein Innengewinde aufweisenden Teil (1a) und einem glatten Teil (1b).
— eine einen Ventilsitz im Boden des zylindrischen Gehäuses (1) bildende und mit einer ersten Fluidleitung (3) in Verbindung stehende axiale Öffnung (2),
— eine Nadelschraube (4) mit einem ein Außengewinde aufweisenden Teil (4a), der mit dem das Innengewinde aufweisenden Teil (1a) des zylindrischen Gehäuses (1) zusammenwirkt, mit einem glatten Teil (4b) gegenüber dem glatten Teil (1b) des zylindrischen Gehäuses (1) und mit einem inneren Ende (5), das ein Ventilverschlußstück zum Zusammenwirken mit der den Ventilsitz im zylindrischen Gehäuse (1) bildenden Öffnung (2) bildet,
— eine radiale Öffnung (6), die in einen Raum (7) mündet, der durch die Nadelschraube (4) und das zylindrische Gehäuse (1) begrenzt ist, wobei die radiale Öffnung (6) mit einer zweiten Fluidleitung (8) in Verbindung steht,
— ein Dichtungsorgan (11) zwischen den glatten Teilen (1b, 4b) des zylindrischen Gehäuses (1) einerseits und der Nadelschraube (4) andererseits
— und Mittel (13) zum Ausüben einer Drehung der Nadelschraube (4), dadurch gekennzeichnet, daß das dem inneren Ende (5) gegenüberliegende äußere Ende (14) der Nadelschraube (4) einen erweiterten und verformbaren Teil (15) aufweist, dessen Außendurchmesser bei nicht in der Einbaulage angeordneter Nadelschraube (4) größer ist als der Innendurchmesser des glatten Teils (1b) des zylindrischen Gehäuses (1), der dieses äußere Ende (14) aufnimmt, nachdem die Nadelschraube (4) in die Einbaulage gebracht worden ist, so daß einerseits eine Drehsicherung der Nadelschraube (4) aufgrund der Reibung zwischen dem erweiterten und verformbaren Teil (15) und dem glatten Teil (1b) und andererseits eine genaue Positionierung der Achse der Nadelschraube (4) in Bezug auf die Achse des zylindrischen Gehäuses (1), um den erweiterten und formbaren Teil (15) in dem glatten Teil (1b) zu zentrieren, bewirkt wird.

2. Nadelventil nach Anspruch 1, dadurch gekennzeichnet, daß der erweiterte und verformbare Teil (15) des äußeren Endes (14) der Nadelschraube (4) zwei Zonen (15a, 15b) aufweist, die zwischen sich eine diametrale Nut (16) begrenzen, die die Mittel zum Ausüben einer Drehung auf die Nadelschraube bilden, wobei die Mittel zum Ausüben der Drehung durch ein Werkzeug mit einer Schraubendreherklinge betätigbar sind.

3. Nadelventil nach Anspruch 2, dadurch gekennzeichnet, daß die beiden erwähnten Zonen (15a, 15b) durch Verformung nach außen, von der erwähnten diametralen Nut (16) aus, gebildet sind.

4. Nadelventil nach Anspruch 3, dadurch gekennzeichnet, daß das äußere Ende (14) der Nadelschraube (4) eine Ringnut (17) etwa in Höhe des Bodens (16a) der erwähnten diametralen Nut (16) aufweist.

**0 033 701**

Fig.1.

Fig.3.

Fig.2.